# EUROPEAN PATENT APPLICATION

(11) **EP 4 813 690 A1**
(43) Date of publication of application: **30.09.2026**
(21) Application number: 26154992.7
(22) Date of filing: 29.01.2026
(51) Int. Cl.: B60K 1/04

(54) **BATTERY INSTALLATION STRUCTURE FOR VEHICLE**

(30) Priority: 26.03.2025 JP 2025052325
(71) Applicant: Toyota Jidosha Kabushiki Kaisha, Toyota-shi, Aichi-ken 471-8571 (JP)
(72) Inventor: YONEZAWA, Shota, Toyota-shi, Aichi-ken 471-8571 (JP); MARUHASHI, Motokuni, Toyota-shi, Aichi-ken 471-8571 (JP); KUMAZAWA, Kazuya, Toyota-shi, Aichi-ken 471-8571 (JP); KIMURA, Kenta, Toyota-shi, Aichi-ken 471-8571 (JP)
(74) Representative: Winter, Brandl - Partnerschaft mbB

(57) **Abstract**

A battery installation structure for a vehicle includes a battery case that accommodates a power storage cell, an equipment case that accommodates equipment electrically connected to the power storage cell and that is disposed upward from the battery case, and a sealing member disposed between the battery case and the equipment case to ensure watertightness of interior space of the battery case and interior space of the equipment case.

## Description

### BACKGROUND OF THE INVENTION

### 1. Field of the Invention

The present invention relates to a battery installation structure for a vehicle.

### 2. Description of Related Art

Japanese Unexamined Patent Application Publication No. 2020-173918 (JP 2020-173918 A) discloses a configuration in which power storage modules are disposed overlaid in an up-down direction inside a vehicle.

### SUMMARY OF THE INVENTION

Due to the layout of interior space of the vehicle, equipment that is electrically connected to power storage cells may be disposed upward from the power storage cells. When the power storage cells and the equipment are each accommodated in separate containers, it is necessary to pass a bus bar, a wire harness, or the like, that connects the power storage cells and the equipment between the containers. On the other hand, it is preferable to ensure watertightness of these containers, such that the power storage cells and the equipment are kept dry.

In light of the foregoing, the present disclosure provides a battery installation structure for a vehicle that can connect power storage cells and equipment each accommodated in separate containers, while ensuring watertightness of these containers.

According to a first aspect, a battery installation structure for a vehicle includes a battery case that accommodates a power storage cell, an equipment case that accommodates equipment electrically connected to the power storage cell and that is disposed upward from the battery case, and a sealing member disposed between the battery case and the equipment case to ensure watertightness of interior space of the battery case and interior space of the equipment case.

In the battery installation structure according to the first aspect, the power storage cell and the equipment are electrically connected to each other. Also, the sealing member is disposed between the battery case that accommodates the power storage cell and the equipment case that accommodates the equipment. This enables watertightness of the battery case and the equipment case to be ensured.

According to a second aspect of the battery installation structure, in the battery installation structure according to the first aspect, the equipment case includes a fixing portion that protrudes downward from a lower face of the equipment case and is fixed to an upper face of the battery case, an opening portion that communicates with the interior space of the battery case and the interior space of the equipment case is fashioned in the fixing portion and the upper face of the battery case, and the sealing member is disposed surrounding the fixing portion.

In the battery installation structure according to the second aspect, the fixing portion protruding from the bottom face of the equipment case and the opening portion in the upper face of the battery case, are formed. Accordingly, communicating the interior space of the equipment case with the internal space of the battery case is easier as compared to a configuration in which the equipment case and the battery case are disposed one above the other and opening portions are formed on a side face of the equipment case and a side face of the battery case. Thus, the sealing member can be readily disposed.

According to a third aspect of the battery installation structure, in the battery installation structure according to the second aspect, the fixing portion and the opening portion are fashioned on a rearward side of the power storage cell and the equipment in a vehicle front-rear direction.

In the battery installation structure of the second aspect, the opening portion passing through in an up-down direction is formed on the rearward side of the power storage cell and the equipment in the vehicle front-rear direction. This enables ensuring a space for passing a bus bar, wire harness, or the like, that connect the power storage cell to the equipment.

According to a fourth aspect of the battery installation structure, in the battery installation structure according to the second aspect or the third aspect, the sealing member is a liquid gasket.

In the battery installation structure according to the fourth aspect, the sealing member is a liquid gasket, and accordingly, ensuring watertightness regardless of the shape of the fixing portion is easier as compared to a solid sealing member.

According to the present disclosure, a power storage cell and equipment each accommodated in separate containers can be connected, while ensuring watertightness of these containers.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an exploded perspective view illustrating principal portions of a battery installation structure for a vehicle according to an embodiment of the present disclosure;
FIG. 2A is a side sectional view illustrating an example of the battery installation structure for a vehicle according to the embodiment of the present disclosure;
FIG. 2B is a side cross-sectional view illustrating a modification of the battery installation structure for a vehicle according to the embodiment of the present disclosure; and
FIG. 3 is a partially enlarged side cross-sectional view illustrating an example of a projection and a resin member of an equipment base according to the embodiment of the present disclosure.

### DETAILED DESCRIPTION OF EMBODIMENTS

A battery installation structure for a vehicle according to an embodiment of the present invention will be described below with reference to the drawings. Components denoted by the same signs in the drawings represent the same components. Note, however, that each component is not limited to being single, and a plurality thereof may be provided, unless otherwise specified in the Specification.

Description of identical structures and signs in the drawings may be omitted. Note that the present disclosure is not limited to the embodiment described below, various changes and modifications may be made and carried out as appropriate within the spirit and scope of the present disclosure, and some components may be omitted or replaced with other components, or one embodiment may be combined with various modifications as appropriate, or the like.

### Vehicle Structure

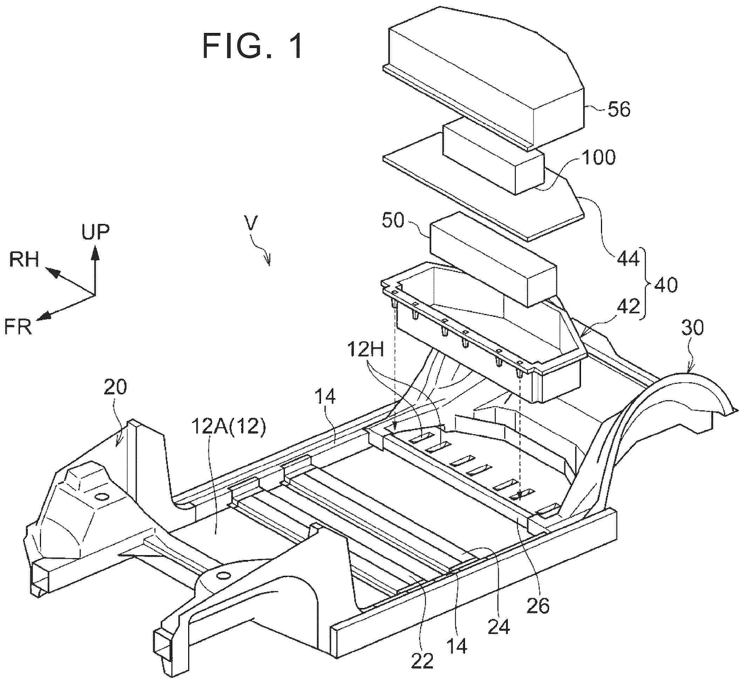

FIG. 1 is a perspective view illustrating principal portions of a vehicle V to which the battery installation structure according to the embodiment of the present invention is applied. In the drawings, arrow FR, arrow UP, and arrow RH indicate a vehicle forward direction, a vehicle upward direction, and a vehicle rightward direction of the vehicle V, respectively.

As illustrated in FIG. 1, a battery case 12 is provided near a middle portion of the vehicle V in a front-rear direction. The battery case 12 is provided in a lower part of the vehicle. Also, an upper face of the battery case 12 forms a floor portion of a vehicle cabin, and accordingly, the vehicle V according to the present embodiment does not include a separate floor panel.

On both sides of the battery case 12 in a vehicle width direction, a pair of right and left rockers 14 is provided extending along the vehicle front-rear direction. Each of the rockers 14 is a structural member having a substantially rectangular closed cross-section. The battery case 12 is attached to the rockers 14 using fasteners that are omitted from illustration

Front end portions of the rockers 14 are connected to a front module 20. On the other hand, rear end portions of the rockers 14 are connected to a rear module 30. The front module 20 and the rear module 30 are each formed integrally by, for example, casting.

A first cross member 22 and a second cross member 24, both serving as cross members, are provided at middle portions of the rockers 14 in the vehicle front-rear direction. The first cross member 22 and the second cross member 24 each extend in the vehicle width direction upward from the battery case 12 and are disposed spanning between the rockers 14. Also, front vehicle seats that are omitted from illustration are attached to the first cross member 22 and the second cross member 24.

On the other hand, a third cross member 26, serving as a cross member, is provided at the rearward portions of the rockers 14 in the vehicle front-rear direction. The third cross member 26 also extends in the vehicle width direction upward from the battery case 12 and is disposed spanning between the rockers 14. A detailed configuration of the third cross member 26 will be described later.

### Battery Case

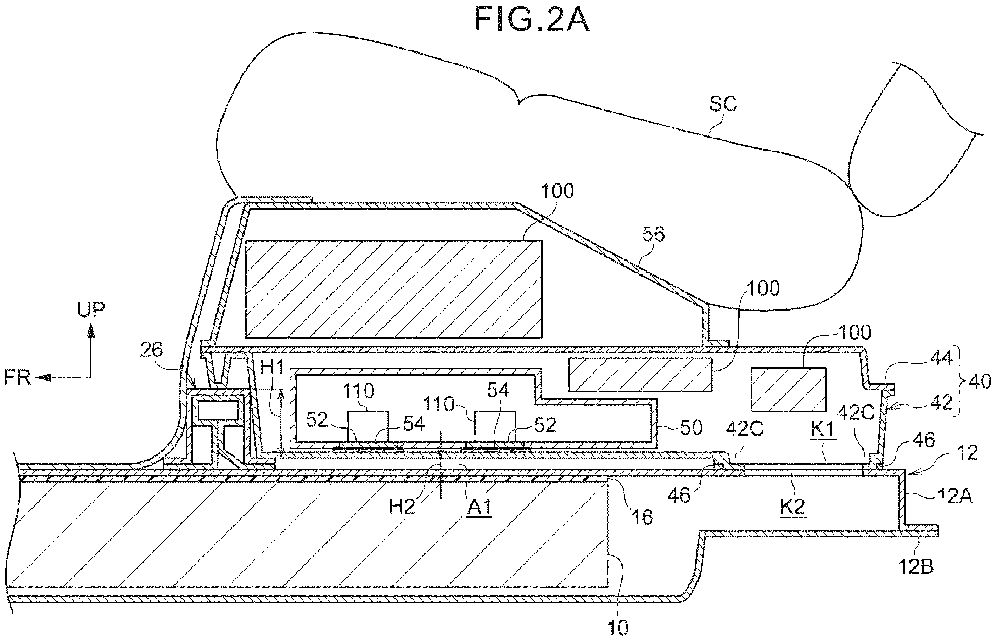

As illustrated in FIG. 2A, the battery case 12 is formed substantially box-shaped and includes an upper case 12A and a lower case 12B. A battery 10 (power storage cell) is installed inside the battery case 12.

The upper case 12A is an upper cover that is disposed upward from the battery 10 and covers the battery 10, and as described above, an upper face thereof forms the floor portion of the vehicle cabin. An opening portion K2 is formed at a rear end portion of the upper case 12A in the vehicle front-rear direction. Interior space of the battery case 12 communicates with interior space of an equipment case 40, which will be described later, through this opening portion K2.

Note that the battery case 12 may be made up of just the upper cover that covers upward of the battery 10. In this case, a member that supports the battery 10 from the downward side, may be provided instead of the lower case 12B.

### Equipment Case

An equipment case 40 is disposed upward from the battery case 12. The equipment case 40 includes an equipment base 42 and a lid 44. The equipment base 42 is a box-shaped housing with an upper end that is open.

The material of the equipment base 42 is not limited in particular, but a material with high thermal conductivity such as aluminum or the like is preferred, from the perspective of improving the heat dissipation performance of heat-generating equipment such as relays 110 and so forth, which will be described later. Also, a die-cast member (cast article) made by casting aluminum or the like is even more preferable.

The lid 44 is a sealing member that closes an opening portion at an upper end of the equipment base 42, and is fixed to the equipment base 42 using fasteners that are omitted from illustration.

Note that in the present disclosure, the equipment base 42 does not necessarily have to be a cast article, and may instead be formed from a metal (e.g., aluminum or stainless steel) plate, or from resin or the like. Even when the equipment base 42 is formed from a metal sheet, resin, or the like, heat generated by the heat-generating equipment such as the relays 110 and so forth is dissipated to the equipment base 42.

### Junction Box

A junction box 50 accommodating the heat-generating equipment such as the relays 110 and so forth is disposed inside the equipment case 40. The junction box 50 is placed on the equipment base 42 and fixed to the equipment base 42 using fasteners that are omitted from illustration.

In addition to the junction box 50, auxiliary devices 100 are also provided inside the equipment case 40. Examples of the auxiliary devices 100 include a power distribution unit (PDU), an electronic control unit (ECU), and so forth.

The relays 110 and the auxiliary devices 100 are connected to the battery 10 via a bus bar, a wire harness, or the like, which are omitted from illustration, and are electrically connected to the battery 10. The heat-generating equipment such as the relays 110 and so forth is driven by power supplied from the battery 10, and may generate heat when being driven.

The relays 110 and the junction box 50 are partially disposed upward from the battery 10 and the upper case 12A. The phrase "partially disposed" indicates that, for example, with respect to the battery 10 extending in the vehicle front-rear direction and the vehicle width direction, these components are positioned above a portion thereof (e.g., rearward side thereof) in the vehicle front-rear direction.

The junction box 50 has opening portions formed at a bottom thereof, and heat-dissipating sheets 52 are disposed in these opening portions. The relays 110 are disposed upward from these heat-dissipating sheets 52. In other words, the heat-dissipating sheets 52 that are thermally conductive members, are disposed between the relays 110 and the equipment base 42. Heat generated when the relays 110 are driven is transferred to the equipment base 42 through the heat-dissipating sheets 52. Also, insulating sheets 54 are disposed downward from the heat-dissipating sheets 52.

Note that in the present disclosure, the heat-dissipating sheets 52 do not necessarily have to be provided, and may be omitted as appropriate. In this case, opening portions do not have to be formed at the bottom of the junction box 50, and the insulating sheets 54 may also be omitted. Even without the heat-dissipating sheets 52, heat from the relays 110 is still transferred to the equipment base 42.

### Auxiliary Device Cover

The auxiliary devices 100 are disposed in multiple tiers. Specifically, auxiliary devices 100 are also disposed upward in the equipment case 40, and these auxiliary devices 100 are covered with an auxiliary device cover 56. The auxiliary device cover 56 is provided upward from the equipment case 40 and supports a seat cushion SC of a rear vehicle seat from a vehicle downward side. Note that another member may be interposed between the auxiliary device cover 56 and the seat cushion SC.

### Fixing Portion

A fixing portion 42C that protrudes downward from a lower face of the equipment base 42 is formed at a rear end portion of the equipment base 42 in the vehicle front-rear direction. The fixing portion 42C is a portion that fixes the rear end portion of the equipment base 42 to the upper case 12A rearward of the junction box 50, and a bottom face thereof is fixed to the upper case 12A by adhesive or the like.

An opening portion K1 is formed in the fixing portion 42C. In other words, an edge of the opening portion K1 formed in the equipment base 42 forms the fixing portion 42C. The opening portion K1 is disposed upward from the opening portion K2 of the upper case 12A. This enables the interior space of the battery case 12 to communicate with the interior space of the equipment case 40.

The opening portions K1 and K2 are formed on the vehicle rearward side from the battery 10 and the junction box 50. A bus bar, a wire harness, or the like, that connects the battery 10 to the auxiliary devices 100 and the junction box 50, is inserted through the opening portions K1 and K2.

### Seal Structure

A sealing member 46 is disposed between the equipment base 42 and the upper case 12A. The sealing member 46 is, for example, a liquid gasket, and is formed surrounding the fixing portion 42C. In other words, the sealing member 46 is formed to surround the opening portion K1. Thus, the sealing member 46 ensures watertightness between the interior space of the equipment case 40 and the internal space of the battery case 12.

### Thermal Insulation Structure

As illustrated in FIG. 2A, an air layer A1 provides thermal insulation between the equipment base 42 and the upper case 12A downward from the relays 110 and downward from the junction box 50.

As described above, the equipment base 42 has the fixing portion 42C formed thereupon that protrudes downward from the bottom face of the equipment base 42, and this fixing portion 42C is fixed to the upper case 12A. A thickness H2 of the air layer A1 is equal to the height by which the fixing portion 42C protrudes.

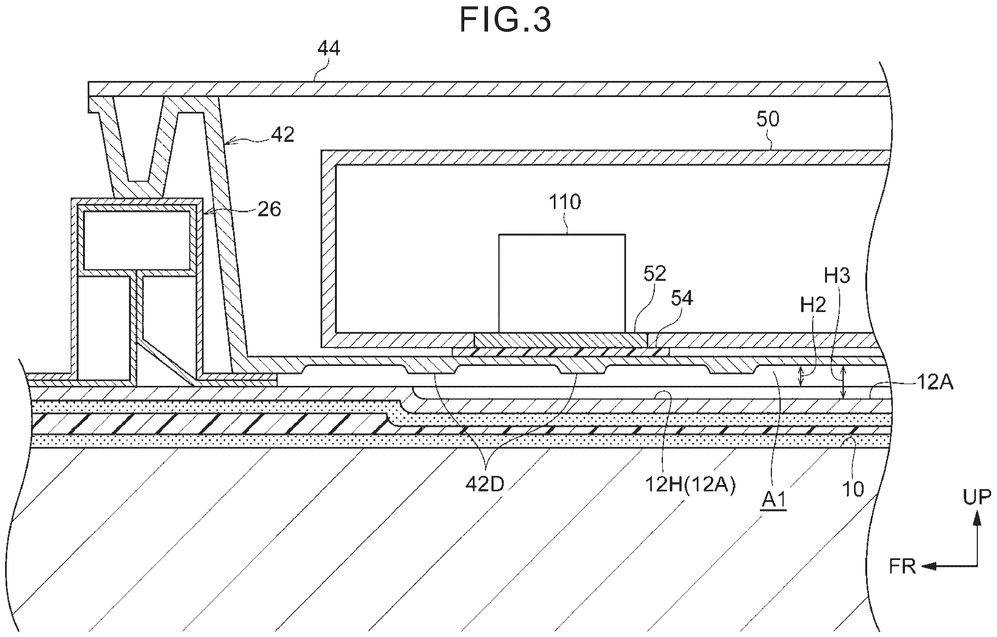

As illustrated in FIG. 3, the air layer A1 communicates with recessed portions 12H of the upper case 12A. Therefore, the air layer that communicates has a greater thickness H3 in the regions where the recessed portions 12H are formed than the thickness H2 in the other regions.

Note that the air layer A1 can be filled with various types of thermally insulating materials, such as fiber-based, foamed resin-based materials, or the like, in order to ensure thermal insulation performance.

### Heat-Dissipating Structure

As illustrated in FIG. 3, projections 42D that protrude downward toward the air layer A1 are formed on the lower face of the equipment base 42. The portions where the projections 42D are formed are thicker than the other portions of the equipment base 42. Accordingly, the equipment base 42 has a greater heat capacity as compared to a case without the projections 42D.

Also, the projections 42D increase the surface area of the lower face of the equipment base 42 as compared to a case without the projections 42D. As a result, heat is more readily dissipated from the equipment base 42 to the air layer A1.

The height by which the projections 42D protrude is smaller than the thickness H2 of the air layer A1 (i.e., the height by which the fixing portion 42C protrudes). This ensures that the projections 42D and the upper case 12A do not interfere with each other.

Note that the shapes of the projections 42D are not limited in particular, and may be formed, for example, in the form of ribs extending along the vehicle width direction. The projections 42D may also be formed in the form of ribs extending along the vehicle front-rear direction. Furthermore, the projections 42D may be formed in a grid pattern along the vehicle width direction and the vehicle front-rear direction. Moreover, the projections 42D may be formed as dots, such as circular projections.

The size, length, height, disposed positions, disposed number, and so forth, of these projections 42D may be set optionally. For example, the projections 42D formed in the form of ribs along the vehicle front-rear direction can be disposed upward from the recessed portions 12H of the upper case 12A. In this case, the projections 42D can protrude into the recessed portions 12H, and accordingly the height of the projections 42D may be greater than the thickness H2 of the air layer A1.

Note that in the present disclosure, it is not always necessary to provide the projections 42D. For example, instead of the projections 42D, a recessed portion that is upwardly recessed may be provided on the lower face of the equipment base 42. Alternatively, the lower face of the equipment base 42 may be formed flat, without neither the projections 42D nor the recessed portions being provided.

### Functions and Effects

### Function of Sealing Member

In the battery installation structure for a vehicle according to the embodiment of the present disclosure, the battery 10 and equipment (relays 110 and auxiliary devices 100) are electrically connected. Also, the sealing member 46 is disposed between the battery case 12 that accommodates the battery 10 and the equipment case 40 that accommodates the device. This enables watertightness of the battery case 12 and the equipment case 40 to be ensured.

Also, in this battery installation structure for a vehicle, the opening portions K1 and K2 are formed in the fixing portion 42C protruding from the bottom face of the equipment case 40 and in the upper face of the battery case 12, respectively.

Accordingly, communication of the interior space of the equipment case 40 and the internal space of the battery case 12 is easier as compared to a configuration in which the equipment case 40 and the battery case 12 are disposed one above the other and opening portions are formed on a side face of the equipment case 40 and a side face of the battery case 12, for example. Thus, the sealing member 46 can be readily disposed.

Also, in this battery installation structure for a vehicle, opening portions K1 and K2 that pass through in the up-down direction are formed on the rearward side of the battery 10 and the junction box 50 in the vehicle front-rear direction. Accordingly, space for passage of a bus bar, a wire harness, or the like, that connects the battery 10 and the junction box 50 (or the equipment inside the junction box 50) can be secured.

Also, in this battery installation structure for a vehicle, the sealing member 46 is a liquid gasket, which makes it easier to ensure watertightness regardless of the shape of the fixing portion 12C, as compared to a solid sealing member.

### Thermal Insulation and Heat Dissipation Effects

In the battery installation structure for a vehicle according to the embodiment of the present disclosure, when the heat-generating equipment such as the relays 110 illustrated in FIG. 2A is driven, the heat generated during driving is dissipated to the equipment base 42. The space between the equipment base 42 and the upper case 12A of the battery 10 is thermally insulated by air. Accordingly, transfer of heat from the equipment base 42 to the battery 10 through the upper case 12A is suppressed, thereby suppressing the battery 10 from being partially heated.

Also, the space between the equipment base 42 and the upper case 12A is thermally insulated, and accordingly transfer of heat generated during operation of the battery 10 to the equipment base 42 through the upper case 12A is also suppressed. Accordingly, when the heat-generating equipment such as the relays 110 and so forth are not being driven, for example, localized cooling of the battery 10 is suppressed.

As described above, in this battery installation structure for a vehicle, heat transfer between the heat-generating equipment such as the relays 110 and so forth, and the battery 10, is suppressed by the thermal insulation, thereby reducing the thermal influence from the equipment on the battery 10.

The battery installation structure for a vehicle according to the embodiment of the present disclosure includes the heat-dissipating sheets 52, serving as thermally conductive members, between the relays 110 and the equipment base 42. This facilitates heat dissipation from the relays 110 to the equipment base 42 and thus overheating of the relays 110 can be suppressed, as compared to a case without the heat-dissipating sheet 52.

Also, in the battery installation structure for a vehicle according to the embodiment of the present disclosure, the equipment base 42 is a cast article. Accordingly, thermal conductivity thereof is higher, and heat is more readily dissipated from the heat-generating equipment such as the relays 110 and so forth to the equipment base 42, as compared to a case in which the equipment base 42 is formed from a metal plate, resin, or the like. Thus, overheating of the heat-generating equipment such as the relays 110 and so forth can be suppressed.

Also, in the battery installation structure for a vehicle according to the embodiment of the present disclosure, the space between the equipment base 42 and the upper case 12A is thermally insulated by the air layer A1. Since air is a gas, it does not interfere with recesses and projections formed on the equipment base 42 or the upper case 12A (e.g., projections 42D formed on equipment base 42, see FIG. 3). Therefore, the shapes of the equipment base 42 and the upper case 12A are less restricted as compared to a case in which a thermally insulating material is placed therebetween.

Air has lower thermal conductivity than resin or metal, and accordingly heat dissipated from the equipment base 42 is less readily transferred to the upper case 12A.

### Functions of Recessed Portion

Also, in the battery installation structure for a vehicle according to the embodiment of the present disclosure, as illustrated in FIG. 3, the upper case 12A has the recessed portions 12H that are recessed downward below the relays 110 and the junction box 50. The distance between the equipment base 42 and the upper case 12A is greater in the region where these recessed portions 12H are formed (thickness H3 of air layer) than in the other regions (thickness H2 of air layer). Accordingly, thermal insulation effects are enhanced as compared with a configuration without the recessed portions 12H.

### Functions of Projections

In the battery installation structure for a vehicle according to the embodiment of the present disclosure, the projections 42D that protrude downward toward the air layer A1 are formed on the lower face of the equipment base 42. These projections 42D increase the surface area of the lower face of the equipment base 42, and accordingly, heat is more readily dissipated from the equipment base 42 to the air layer A1. Thus, heat generated by the heat-generating equipment such as the relays 110 and so forth is more readily dissipated to the equipment base 42, as compared with a case without the projections 42D.

On the other hand, air has lower thermal conductivity than resin or metal, and accordingly heat dissipated from the equipment base 42 is less readily transferred to the upper case 12A through the air layer A1 between the equipment base 42 and the upper case 12A. Accordingly, transfer of heat to the battery 10 can be suppressed.

Note that as described above, the shape of the projections 42D is not limited in particular. When the projections 42D are formed in a grid pattern, the surface area of the lower face of the equipment base 42 can be more easily increased as compared to a case of being formed as linear ribs or in a dot pattern.

Alternatively, when the projections 42D are formed as ribs extending in the vehicle front-rear direction, the projections 42D can be disposed upward from the recessed portions 12H. At this time, the projections 42D can protrude into the recessed portions 12H. Thus, heat is more readily dissipated from the equipment base 42 to the air in the air layer A1 and the recessed portions 12H.

Note that in the above embodiment, the space between the equipment base 42 and the upper case 12A is thermally insulated by the air layer A1 that communicates with the recessed portions 12H, but the embodiment of the present disclosure is not limited to this. For example, it is not necessary to form such an air layer A1. That is to say, the equipment base 42 and the upper case 12A may be disposed in contact with each other.

### Other Embodiments

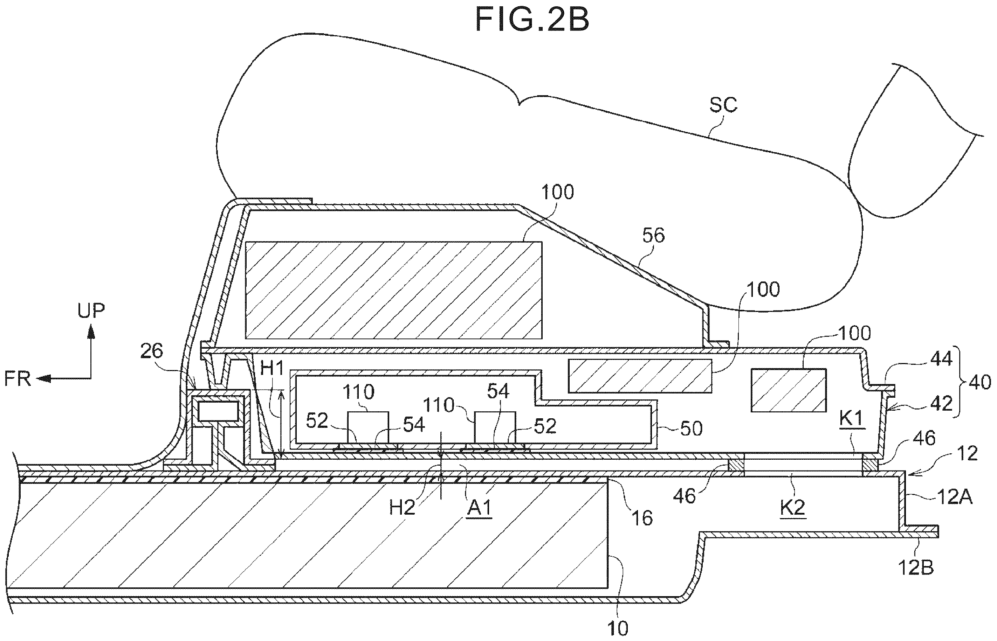

In the above embodiment, the fixing portion 42C that protrudes downward from the bottom face of the equipment base 42 is formed on the equipment base 42, but the embodiment of the present disclosure is not limited to this. For example, as illustrated in FIG. 2B, a configuration without the fixing portion 42C may be adopted.

In this case, the sealing member 46 is disposed between the battery case 12 and the equipment case 40, surrounding the opening portions K1 and K2. Also, in this case, a soft gasket made of rubber, or the like, can be used for the sealing member 46.

Also, in the above embodiment, the opening portions K1 and K2 are formed on the rearward side of the battery 10 and the junction box 50 in the vehicle front-rear direction, but the embodiment of the present invention is not limited to this.

For example, the opening portions K1 and K2 may be formed upward from the battery 10 and also downward from the junction box 50. The positions of the opening portions K1 and K2 are not limited in particular, as long as a bus bar or a wire harness or the like that connects the battery 10 and the junction box 50 (or the equipment inside the junction box 50) can be disposed therein.

## Claims

1. A battery installation structure for a vehicle, the battery installation structure comprising:
a battery case that accommodates a power storage cell;
an equipment case that accommodates equipment electrically connected to the power storage cell and that is disposed upward from the battery case; and
a sealing member disposed between the battery case and the equipment case to ensure watertightness of interior space of the battery case and interior space of the equipment case.

2. The battery installation structure according to claim 1, wherein
the equipment case includes a fixing portion that protrudes downward from a lower face of the equipment case and is fixed to an upper face of the battery case,
an opening portion that communicates with the interior space of the battery case and the interior space of the equipment case is fashioned in the fixing portion and the upper face of the battery case, and
the sealing member is disposed surrounding the fixing portion.

3. The battery installation structure according to claim 2, wherein the fixing portion and the opening portion are fashioned on a rearward side of the power storage cell and the equipment in a vehicle front-rear direction.

4. The battery installation structure according to claim 2, wherein the sealing member is a liquid gasket.
